# EUROPEAN PATENT APPLICATION

(11) **EP 4 135 068 A2**
(43) Date of publication of application: **15.02.2023**
(21) Application number: 22187008.2
(22) Date of filing: 26.07.2022
(51) Int. Cl.: H01M 4/133, H01M 4/587, H01M 4/02, H01M 10/0525

(54) **NEGATIVE ELECTRODE AND RECHARGEABLE LITHIUM BATTERY INCLUDING THE SAME**

(30) Priority: 27.07.2021 KR 20210098788
(71) Applicant: Samsung SDI Co., Ltd., Yongin-si, Gyeonggi-do 17084 (KR)
(72) Inventor: JEONG, Min-Young, 17084 Yongin-si (KR); BAE, Juhye, 17084 Yongin-si (KR); AHN, Won-Gi, 17084 Yongin-si (KR); LEE, Taeil, 17084 Yongin-si (KR)
(74) Representative: Marks & Clerk LLP

(57) **Abstract**

Disclosed are a negative electrode active material for a rechargeable lithium battery and a rechargeable lithium battery including the same. The negative electrode for a rechargeable lithium battery includes a current collector and a negative electrode active material layer disposed on the current collector, wherein the negative electrode active material layer includes a first region in contact with the current collector and including a first negative electrode active material, and a second region disposed on the first region and including a second negative electrode active material, each of the first negative electrode active material and second negative electrode active material has an average particle diameter (D50) of 9 µm to 22 µm, morphologies of the first negative electrode active material and the second negative electrode active material are different from each other, a porosity of the second region is higher than that of the first region, and a ratio of the porosity of the second region to the porosity of the first region ranges from 110% to 190%.

## Description

### BACKGROUND

### 1. Field

A negative electrode for a rechargeable lithium battery and a rechargeable lithium battery including the same are disclosed.

### 2. Description of the Related Art

A portable information device such as a cell phone, a laptop, smart phone, and the like or an electric vehicle has used a rechargeable lithium battery having high energy density and easy portability as a driving power source. Recently, research has been actively conducted to use a rechargeable lithium battery with high energy density as a driving power source or power storage power source for hybrid or electric vehicles.

This rechargeable lithium battery requires a high-capacity electrode, but since there is a limit to increasing capacity of an active material itself, it is necessary to increase an amount of the active material and thus make the electrode thicker. As an electrode plate is thicker, resistance of lithium ions within pores of the electrode plate than resistance of insertion of the lithium ions into the active material becomes more important to performance of the electrode. However, since this internal resistance may greatly vary depending on a structure of the electrode plate, various studies are being made to reduce the resistance by improving the structure of the electrode plate.

### SUMMARY

Provided are a negative electrode for a rechargeable lithium battery that, in a thick-film electrode that maximizes capacity, is capable of alleviating non-uniformity of resistance, improving output characteristics, improving capacity retention at high rates, and maintaining high cycle-life even during rapid charging and discharging, and a rechargeable lithium battery including the same.

An embodiment provides a negative electrode for a rechargeable lithium battery including a current collector and a negative electrode active material layer disposed on the current collector, wherein the negative electrode active material layer includes a first region in contact with the current collector and including a first negative electrode active material, and a second region disposed on the first region and including a second negative electrode active material, each of the first negative electrode active material and second negative electrode active material has an average particle diameter (D50) of about 9 µm to about 22 µm, morphologies of the first negative electrode active material and the second negative electrode active material are different from each other, a porosity of the second region is higher than that of the first region, and a ratio of the porosity of the second region to the porosity of the first region ranges from about 110% to about 190%.

Another embodiment provides a rechargeable lithium battery including the negative electrode, a positive electrode, and an electrolyte.

At least some of the above and other features of the invention are set out in the claims.

The negative electrode manufactured according to an embodiment and the rechargeable lithium battery including the same alleviates the resistance non-uniformity in the thick-film electrode, improves output characteristics and capacity retention rate at a high rate, and a high cycle-life even during rapid charging and discharging while realizing high capacity.

### BRIEF DESCRIPTION OF THE DRAWINGS

FIG. 1 is a schematic view illustrating a rechargeable lithium battery according to an embodiment.
FIG. 2 is a scanning electron microscopic photograph of the first negative electrode active material according to Example 1.
FIG. 3 is a scanning electron microscopic photograph of the second negative electrode active material according to Example 1.
FIG. 4 is a scanning electron microscopic photograph of a cross-section of the negative electrode according to Example 1.
FIG. 5 is a graph showing porosities of the negative electrode active material layers of Example 1, Comparative Example 1, and Comparative Example 2 measured through nano-computed tomography.
FIG. 6 is a graph showing discharge rates according to C-rates for the battery cells of Example 1, Comparative Example 1, and Comparative Example 2.
FIG. 7 is a graph showing a lithium precipitation amount according to C-rates for the battery cell of Comparative Example 1.
FIG. 8 is a graph showing a lithium precipitation amount according to C-rates for the battery cell of Example 1.
FIG. 9 is a scanning electron microscopic photograph of a cross-section of the negative electrode according to Example 2.
FIG. 10 is a scanning electron microscopic photograph of a cross-section of the negative electrode according to Example 3.
FIG. 11 is a scanning electron microscopic photograph of a cross section of the negative electrode according to Comparative Example 3.

### DETAILED DESCRIPTION

Hereinafter, specific embodiments will be described in detail so that those of ordinary skill in the art can easily implement them. However, this disclosure may be embodied in many different forms and is not construed as limited to the example embodiments set forth herein.

The terminology used herein is used to describe embodiments only, and is not intended to limit the present disclosure. The singular expression includes the plural expression unless the context clearly dictates otherwise.

As used herein, "a combination thereof" refers to a mixture, a laminate, a composite, a copolymer, an alloy, a blend, a reaction product, and the like of constituents.

Herein, it should be understood that terms such as "comprises," "includes," or "have" are intended to designate the presence of an embodied feature, number, step, element, or a combination thereof, but it does not preclude the possibility of the presence or addition of one or more other feature, number, step, element, or a combination thereof.

In the drawings, the thickness of layers, films, panels, regions, etc., are exaggerated for clarity and like reference numerals designate like elements throughout the specification. It will be understood that when an element such as a layer, film, region, or substrate is referred to as being "on" another element, it can be directly on the other element or intervening elements may also be present. In contrast, when an element is referred to as being "directly on" another element, there are no intervening elements present.

In addition, "layer" herein includes not only a shape formed on the whole surface when viewed from a plan view, but also a shape formed on a partial surface.

In addition, the average particle diameter may be measured by a method well known to those skilled in the art, for example, may be measured by a particle size analyzer, or may be measured by a transmission electron micrograph or a scanning electron micrograph. Alternatively, it is possible to obtain an average particle diameter value by measuring using a dynamic light scattering method, performing data analysis, counting the number of particles for each particle size range, and calculating from this. Unless otherwise defined, the average particle diameter is measured by a particle size analyzer, and may mean the diameter (D50) of particles having a cumulative volume of 50 volume% in the particle size distribution.

### Negative Electrode

In an embodiment, a negative electrode for a rechargeable lithium battery includes a current collector and a negative electrode active material layer disposed on the current collector, wherein the negative electrode active material layer includes a first region in contact with the current collector and including a first negative electrode active material, and a second region disposed on the first region and including a second negative electrode active material. Herein, an average particle diameter (D50) of each of the first negative electrode active material and the second negative electrode active material is about 9 µm to about 22 µm, and morphologies of the first negative electrode active material and the second negative electrode active material are different from each other. In addition, a porosity of the second region is higher than that of the first region, and a ratio of the porosity of the second region to the porosity of the first region is about 110% to about 190%.

The negative electrode for the rechargeable lithium battery may be a thick-filmed electrode plate maximizing capacity. As the electrode plate becomes thicker, insertion of lithium ions are more difficult into the current collector of the electrode plate during the charge, and accordingly, resistance is concentrated on the surface of the electrode plate, resulting in resistance non-uniformity, which is further exacerbated in high-rate batteries. An embodiment may provide a negative electrode for a rechargeable lithium battery structurally having the second region with higher porosity than that of the first region by applying a negative electrode active material having different morphologies in the first region (lower portion) and the second region (upper portion) as well as making the electrode plate thicker to increase capacity. Thereby, the resistance on the surface of the electrode plate may be alleviated and the output characteristics of the battery may be improved.

In an embodiment, the ratio of the porosity of the second region to the porosity of the first region ranges from about 110% to about 190%, and, for example, may be about 120% to about 190%. A negative electrode for a rechargeable lithium battery that satisfies this range may alleviate non-uniformity phenomenon of resistance and may exhibit excellent output characteristics while implementing a high capacity. The porosity may be measured through nano-computed tomography (nano-CT), a scanning electron microscope (SEM), or other general methods. A ratio of the porosity of the second region to the porosity of the first region is calculated according to a calculation equation {(porosity of second region)/(porosity of first region) X 100%}.

The porosity of the first region, which is measured through the nano-computed tomography, may be greater than or equal to about 5% and less than about 16%, for example, about 5% to about 15.5%, about 7% to about 15.5%, about 9% to about 15.5%, about 10% to about 15.5%, or about 12% to about 15%. In addition, the porosity of the second region, which is measured through the nano-computed tomography, may be greater than or equal to about 16% and less than about 25%, for example, about 16% to about 24%, about 16% to about 22%, about 16% to about 20%, or about 17% to about 19%. When the first region and the second region satisfy these porosity ranges, the resistance non-uniformity of the electrode plate may be alleviated, and output characteristics and cycle-life characteristics may be improved. However, the porosity may vary depending on the type of the negative electrode active material and the composition of the negative electrode active material layer slurry.

The porosity of the first region, which is measured through an image of the scanning electron microscope, may be greater than or equal to about 5% and less than about 13%, for example, about 5% to about 12.5%, about 7% to about 12.5%, about 9% to about 12.5%, or about 10% to about 12%, and the porosity of the second region may be greater than or equal to about 13% and less than about 25%, for example, about 13% to about 24%, about 13% to about 22%, about 14% to about 20%, or about 15% to about 19%. When the first region and the second region satisfy the porosity ranges, the resistance non-uniformity of the electrode plate may be alleviated, and output characteristics and cycle-life characteristics may be improved. However, the porosity may vary depending on the type of the negative electrode active material and the composition of the negative electrode active material layer slurry.

The first negative electrode active material applied to the first region and the second negative electrode active material applied to the second region may have the same average particle diameters and different morphologies. For example, the first negative electrode active material may be spherical, and the second negative electrode active material may be amorphous. Here, the spherical shape includes a shape similar to a sphere and refers to a round shape without an angle. The first negative electrode active material has a morphology close to a sphere and has a form easily pressed during the compression. The first region composed of these has a high internal density and relatively low porosity. The second negative electrode active material has a non-uniform morphology, whose specific surface area is higher than that of a spherical shape. The second region composed of these may have relatively high porosity.

The first negative electrode active material and the second negative electrode active material may each include a carbon-based active material. The carbon-based active material may include crystalline carbon, amorphous carbon, or a combination thereof. Examples of the crystalline carbon may include sheet-shaped, flake-shaped, sphere-shaped, or fiber-shaped graphite and the graphite may be natural graphite or artificial graphite. The amorphous carbon may be a soft carbon, a hard carbon, a mesophase pitch carbonization product, calcined coke, and the like.

The average particle diameter (D50) of the first negative electrode active material and the average particle diameter (D50) of the second negative electrode active material may be similar to each other, and may range from about 9 µm to about 22 µm, respectively. The average particle diameter of the first negative electrode active material and the average particle diameter of the second negative electrode active material may range, for example, from about 10 µm to about 21 µm, from about 10 µm to about 20 µm, from about 11 µm to about 19 µm, or from about 12 µm to about 18 µm, respectively. When the first negative electrode active material and the second negative electrode active material satisfy these particle diameter ranges, high capacity may be realized and excellent output characteristics and cycle-life characteristics may be exhibited.

A tap density of the first negative electrode active material may be greater than a tap density of the second negative electrode active material. For example, the tap density of the first negative electrode active material may range from about 1.2 g/cc to about 1.5 g/cc, and the tap density of the second negative electrode active material may range from about 0.8 g/cc to about 1.4 g/cc. Alternatively, the first negative electrode active material may have a tap density of about 1.25 g/cc to about 1.5 g/cc, and the second negative electrode active material may have a tap density of about 1.0 g/cc to about 1.24 g/cc. When the tap densities of the first negative electrode active material and the second negative electrode active material each satisfy these ranges, the porosity of the second region may be designed to be higher than that of the first region, thereby alleviating non-uniformity of resistance and improving output characteristics and cycle-life characteristics of the battery. The tap density may be measured by filling a 100cc measuring cylinder with 50cc of a negative electrode active material, performing tapping 1000 times to reciprocate a height of 3 mm every second, and then dividing the mass by volume.

A BET specific surface area of the first negative electrode active material may be greater than that of the second electrode negative electrode active material. For example, the BET specific surface area of the first negative electrode active material may range from about 1.4 m²/g to about 2.0 m²/g, and the specific surface area of the second negative electrode active material may range from about 1.0 m²/g to about 1.8 m²/g. Alternatively, the BET specific surface area of the first negative electrode active material may range about 1.5 m²/g to about 2.0 m²/g, and the specific surface area of the second negative electrode active material may range about 1.0 m²/g to about 1.7 m²/g. When the first negative electrode active material and the second negative electrode active material each have BET specific surface area satisfying these ranges, the second region may be designed to have higher porosity than the first region, thereby alleviating the resistance non-uniformity and improving output characteristics and cycle-life characteristics of a battery.

Meanwhile, the first region and/or the second region may further include a silicon-based active material. When the silicon-based active material is further included, a rechargeable lithium battery having a higher capacity may be realized. The silicon-based negative electrode active material may include silicon, a silicon-carbon composite, SiOₓ (0<x<2), a Si-Q alloy (wherein Q is an alkali metal, an alkaline-earth metal, a Group 13 element, a Group 14 element, a Group 15 element, a Group 16 element, a transition metal, a rare earth element, and a combination thereof, but not Si).

The silicon-carbon composite may be, for example, a silicon-carbon composite including a core including crystalline carbon and silicon particles and an amorphous carbon coating layer disposed on the surface of the core. The crystalline carbon may be artificial graphite, natural graphite, or a combination thereof. The amorphous carbon precursor may be a coal-based pitch, mesophase pitch, petroleum-based pitch, coal-based oil, petroleum-based heavy oil, or a polymer resin such as a phenol resin, a furan resin, or a polyimide resin. In this case, the content of silicon may be about 10 wt% to about 50 wt% based on the total weight of the silicon-carbon composite. In addition, the content of the crystalline carbon may be about 10 wt% to about 70 wt% based on the total weight of the silicon-carbon composite, and the content of the amorphous carbon may be about 20 wt% to about 40 wt% based on the total weight of the silicon-carbon composite. In addition, a thickness of the amorphous carbon coating layer may be about 5 nm to about 100 nm. An average particle diameter (D50) of the silicon particles may be about 10 nm to about 200 nm. The silicon particles may exist in an oxidized form, and in this case, an atomic content ratio of Si:O in the silicon particles indicating a degree of oxidation may be about 99:1 to about 33:66. The silicon particles may be SiOₓ particles, and in this case, the range of x in SiOₓ may be greater than about 0 and less than about 2.

The average particle diameter (D50) of the silicon-based active material may range from about 1 µm to about 20 µm, or for example, about 5 µm to about 15 µm. The silicon-based active material may have tap density of about 0.3 g/cc to about 1.1 g/cc, for example, about 0.5 g/cc to about 1.0 g/cc. In addition, the silicon-based active material may have a BET specific surface area of about 1.9 m²/g to about 2.7 m²/g, for example, about 2.0 m²/g to about 2.5 m²/g. The silicon-based active material may be various morphologies such as a spherical shape, an irregular shape, and the like, for example, a shape closed to the spherical shape. When properties of the silicon-based active material satisfy the ranges, a negative electrode including the same may improve cycle-life characteristics and general battery performance such as charge and discharge efficiency and the like.

When the first region and/or the second region further include the silicon-based active material, the silicon-based active material may be included in an amount of about 1 wt% to about 15 wt%, or for example, about 5 wt% to about 14 wt% based on the total weight of each region. When the silicon-based active material is included in this amount range, the rechargeable lithium battery may exhibit excellent output characteristics and cycle-life characteristics while realizing a high capacity.

The negative electrode for a rechargeable lithium battery according to an embodiment may be a thickened negative electrode for maximizing capacity, and thus each thickness of the first region and the thickness of the second region may range from about 30 µm to about 100 µm, for example, about 30 µm to about 80 µm, or about 40 µm to about 70 µm. A total thickness of the negative electrode active material layer including the first region and the second region may range from about 60 µm to about 200 µm, for example, about 70 µm to about 150 µm, or about 80 µm to about 140 µm. When the negative electrode active material layer is formed on both surfaces of the current collector, the negative electrode may have a total thickness of about 120 µm to about 400 µm, about 130 µm to about 400 µm, for example, about 150 µm to about 300 µm, or about 160 µm to about 250 µm. When each region and the thickness of the negative electrode satisfy the ranges, very high capacity may be realized, and according to an embodiment, porosities of the first region and the second region may be adjusted to realize excellent output characteristics and cycle-life characteristics with this thickness. On the other hand, a thickness of each region may be a thickness of the compressed electrode plate.

In the negative electrode active material layer, the content of the negative electrode active material may be about 90 wt% to about 99.9 wt%, or about 95 wt% to about 99 wt% based on the total weight of the negative electrode active material layer.

In an embodiment, the negative electrode active material layer may further include a binder, and may optionally further include a conductive material. The content of the binder in the negative electrode active material layer may be about 0.5 wt% to about 5 wt%, or about 1 wt% to about 3 wt% based on the total weight of the negative electrode active material layer. In addition, when the conductive material is further included, the negative electrode active material layer may include about 90 wt% to about 98 wt% of the negative electrode active material, about 1 wt% to about 5 wt% of the binder, and about 1 wt% to about 5 wt% of the conductive material.

The first region and the second region in the negative electrode active material layer all may include a binder, wherein the binder may be included in an amount of about 0.5 wt% to about 5 wt% based on the total weight of each region. In addition, in an embodiment, the binder of the first region and the binder of the second region may be used in a weight ratio of about 60:40 to about 95:5, for example, about 70:30 to about 90:10. When the weight ratio of the binders of the first region and the second region satisfies the ranges, a stable electrode plate, although thickened, may be obtained, and output characteristics and cycle-life characteristics of a battery and the like may be improved.

The binder serves to well adhere the negative electrode active material particles to each other and also to adhere the negative electrode active material to the current collector. The binder may be a water-insoluble binder, a water-soluble binder, or a combination thereof.

Examples of the water-insoluble binder include polyvinyl chloride, carboxylated polyvinyl chloride, polyvinyl fluoride, an ethylene oxide-containing polymer, an ethylene propylene copolymer, polystyrene, polyvinylpyrrolidone, polyurethane, polytetrafluoroethylene, polyvinylidene fluoride, polyethylene, polypropylene, polyamideimide, polyimide, or a combination thereof.

The water-soluble binder may include a rubber binder or a polymer resin binder. The rubber binder may be selected from a styrene-butadiene rubber, an acrylated styrene-butadiene rubber, an acrylonitrile-butadiene rubber, an acrylic rubber, a butyl rubber, a fluororubber, and a combination thereof. The polymer resin binder may be selected from polyethylene oxide, polyvinylpyrrolidone, polyepichlorohydrin, polyphosphazene, polyacrylonitrile, an ethylene propylene diene copolymer, polyvinylpyridine, chlorosulfonated polyethylene, latex, a polyester resin, an acrylic resin, a phenol resin, an epoxy resin, polyvinyl alcohol, and a combination thereof.

When a water-soluble binder is used as the negative electrode binder, a cellulose-based compound capable of imparting viscosity may be further included. As the cellulose-based compound, one or more of carboxymethyl cellulose, hydroxypropylmethyl cellulose, methyl cellulose, or alkali metal salts thereof may be mixed and used. As the alkali metal, Na, K, or Li may be used. The amount of the thickener used may be about 0.1 parts by weight to about 3 parts by weight based on 100 parts by weight of the negative electrode active material.

The conductive material is included to provide electrode conductivity. Any electrically conductive material may be used as a conductive material unless it causes a chemical change. Examples of the conductive material include a carbon-based material such as natural graphite, artificial graphite, carbon black, acetylene black, ketjen black, a carbon fiber, a carbon nanofiber, a carbon nanotube, and the like; a metal-based material of a metal powder or a metal fiber including copper, nickel, aluminium, silver, and the like; a conductive polymer such as a polyphenylene derivative; or a mixture thereof.

The current collector may include one selected from a copper foil, a nickel foil, a stainless steel foil, a titanium foil, a nickel foam, a copper foam, a polymer substrate coated with a conductive metal, and a combination thereof.

On the other hand, in the negative electrode according to an embodiment, the second region may be formed after forming the first region in the current collector, or the first and second regions may be simultaneously formed by using an application equipment such as a double slot die and the like and then, drying and compressing it.

### Positive Electrode

A positive electrode for a rechargeable lithium battery may include a current collector and a positive electrode active material layer disposed on the current collector. The positive electrode active material layer may include a positive electrode active material, and may further include a binder and/or a conductive material.

The positive electrode active material may include lithiated intercalation compounds that reversibly intercalate and deintercalate lithium ions. Examples of the positive electrode active material include a compound represented by any one of the following chemical formulas:
LiₐA_{1-b}X_{b}D₂(0.90 ≤ a ≤ 1.8, 0 ≤ b ≤ 0.5);
LiₐA_{1-b}X_{b}O_{2-c}D_{c}(0.90 ≤ a ≤ 1.8, 0 ≤ b ≤ 0.5, 0 ≤ c ≤ 0.05);
LiₐE_{1-b}X_{b}O_{2-c}D_{c}(0.90 ≤ a ≤ 1.8, 0 ≤ b ≤ 0.5, 0 ≤ c ≤ 0.05);
LiₐE_{2-b}X_{b}O_{4-c}D_{c}(0.90 ≤ a ≤ 1.8, 0 ≤ b ≤ 0.5, 0 ≤ c ≤ 0.05);
LiₐNi_{1-b-c}Co_{b}X_{c}D_{α}(0.90 ≤ a ≤ 1.8, 0 ≤ b ≤ 0.5, 0 ≤ c ≤ 0.5, 0 < α ≤ 2);
LiₐNi_{1-b-c}Co_{b}X_{c}O_{2-α}T_{α}(0.90 ≤ a ≤ 1.8, 0 ≤ b ≤ 0.5, 0 ≤ c ≤ 0.05, 0 < α < 2);
LiₐNi_{1-b-c}Co_{b}X_{c}O_{2-α}T₂(0.90 ≤ a ≤ 1.8, 0 ≤ b ≤ 0.5, 0 ≤ c ≤ 0.05, 0 < α < 2);
LiₐNi_{1-b-c}Mn_{b}X_{c}D_{α}(0.90 ≤ a ≤ 1.8, 0 ≤ b ≤ 0.5, 0 ≤ c ≤ 0.05, 0 < α ≤ 2);
LiₐNi_{1-b-c}Mn_{b}X_{c}O_{2-α}T_{α}(0.90 ≤ a ≤ 1.8, 0 ≤ b ≤ 0.5, 0 ≤ c ≤ 0.05, 0 < α < 2);
LiₐNi_{1-b-c}Mn_{b}X_{c}O_{2-α}T₂(0.90 ≤ a ≤ 1.8, 0 ≤ b ≤ 0.5, 0 ≤ c ≤ 0.05, 0 < α < 2);
LiₐNi_{b}E_{c}G_{d}O₂(0.90 ≤ a ≤ 1.8, 0 ≤ b ≤ 0.9, 0 ≤ c ≤ 0.5, 0.001 ≤ d ≤ 0.1);
LiₐNi_{b}Co_{c}Mn_{d}GₑO₂(0.90 ≤ a ≤ 1.8, 0 ≤ b ≤ 0.9, 0 ≤ c ≤ 0.5, 0 ≤ d ≤0.5, 0.001 ≤ e ≤ 0.1);
LiₐNiG_{b}O₂(0.90 ≤ a ≤ 1.8, 0.001 ≤ b ≤ 0.1);
LiₐCoG_{b}O₂(0.90 ≤ a ≤ 1.8, 0.001 ≤ b ≤ 0.1);
LiₐMn_{1-b}G_{b}O₂(0.90 ≤ a ≤ 1.8, 0.001 ≤ b ≤ 0.1);
LiₐMn₂G_{b}O₄(0.90 ≤ a ≤ 1.8, 0.001 ≤ b ≤ 0.1);
LiₐMn_{1-g}GgPO₄(0.90 ≤ a ≤ 1.8, 0 ≤ g ≤ 0.5);
QO₂; QS₂; LiQS₂;
V₂O₅; LiV₂O₅;
LiZO₂;
LiNiVO₄;
Li_{(3-f)}J₂(PO₄)₃ (0 ≤ f ≤ 2);
Li_{(3-f)}Fe₂(PO₄)₃ (0 ≤ f ≤ 2); and
LiₐFePO₄ (0.90 ≤ a ≤ 1.8).

In the above chemical formulas, A is selected from Ni, Co, Mn, and a combination thereof; X is selected from Al, Ni, Co, Mn, Cr, Fe, Mg, Sr, V, a rare earth element, and a combination thereof; D is selected from O, F, S, P, and a combination thereof; E is selected from Co, Mn, and a combination thereof; T is selected from F, S, P, and a combination thereof; G is selected from Al, Cr, Mn, Fe, Mg, La, Ce, Sr, V, and a combination thereof; Q is selected from Ti, Mo, Mn, and a combination thereof; Z is selected from Cr, V, Fe, Sc, Y, and a combination thereof; and J is selected from V, Cr, Mn, Co, Ni, Cu, and a combination thereof.

The compounds may have a coating layer on the surface, or may be mixed with another compound having a coating layer. The coating layer may include at least one coating element compound selected from an oxide of a coating element, a hydroxide of a coating element, an oxyhydroxide of a coating element, an oxycarbonate of a coating element, and a hydroxy carbonate of a coating element. The compound for the coating layer may be amorphous or crystalline. The coating element included in the coating layer may include Mg, Al, Co, K, Na, Ca, Si, Ti, V, Sn, Ge, Ga, B, As, Zr, or a combination thereof. A method of forming the coating layer may be a method that does not adversely affect physical properties of the positive electrode active material, for example, spray coating, dipping, dry coating, atomic deposition, evaporation, and the like.

The positive electrode active material may be, for example, at least one of lithium composite oxides represented by Chemical Formula 11.

[Chemical Formula 11] LiₐM¹¹_{1-y11-z11}M¹²_{y11}M¹³_{z11}O₂

In Chemical Formula 11, 0.9≤a≤1.8, 0≤y11≤1, 0≤z11≤1, 0≤y11+z11<1, and M¹¹, M¹², and M¹³ are each independently Ni, Co, Mn, Al, Mg, Ti, Fe, or a combination thereof.

For example, M¹¹ may be Ni and M¹² and M¹³ may each independently be a metal of Co, Mn, Al, Mg, Ti, or Fe. As a specific example, M¹¹ may be Ni, M¹² may be Co, and M¹³ may be Mn or Al, but the present disclosure is not limited thereto.

In a specific embodiment, the positive electrode active material may be a lithium nickel-based oxide represented by Chemical Formula 12.

[Chemical Formula 12] Liₐ₁₂Niₓ₁₂M¹⁴y₁₂M¹⁵_{1-x12-y12}O₂

In Chemical Formula 12, 0.9≤a12≤1.8, 0.3≤x12≤1, 0≤y12≤0.7, M¹⁴ and M¹⁵ are each independently Al, B, Ce, Co, Cr, F, Mg, Mn, Mo, Nb, P, S, Si, Sr, Ti, V, W, Zr or a combination thereof.

The positive electrode active material may include, for example, a compound of Chemical Formula 13.

[Chemical Formula 13] Liₐ₁₃Niₓ₁₃Co_{y13}M¹⁶_{1-x13-y13}O₂

In Chemical Formula 13, 0.9≤a13≤1.8, 0.3≤x13<1, 0<y13≤0.7, and M¹⁶ is Al, B, Ce, Cr, F, Mg, Mn, Mo, Nb, P, S, Si, Sr, Ti, V, W, Zr, or a combination thereof.

The content of the positive electrode active material may be about 90 wt% to about 98 wt%, for example about 90 wt% to about 95 wt% based on the total weight of the positive electrode active material layer. Each content of the binder and the conductive material may be about 1 wt% to about 5 wt% based on the total weight of the positive electrode active material layer.

The binder improves binding properties of positive electrode active material particles with one another and with a current collector. Examples thereof may include polyvinyl alcohol, carboxylmethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and the like, but are not limited thereto.

The conductive material is used to impart conductivity to the electrode, and any material may be used as long as it does not cause chemical change in the battery to be configured and is an electron conductive material. Examples of the conductive material may include a carbon-based material such as natural graphite, artificial graphite, carbon black, acetylene black, ketjen black, a carbon fiber, a carbon nanofiber, a carbon nanotube, and the like; a metal-based material of a metal powder or a metal fiber, and the like including copper, nickel, aluminium silver, and the like; a conductive polymer such as a polyphenylene derivative; or a mixture thereof.

The current collector may include an aluminium foil, but is not limited thereto.

### Rechargeable Lithium Battery

Another embodiment provides a rechargeable lithium battery including a positive electrode, a negative electrode, a separator disposed therebetween, and an electrolyte.

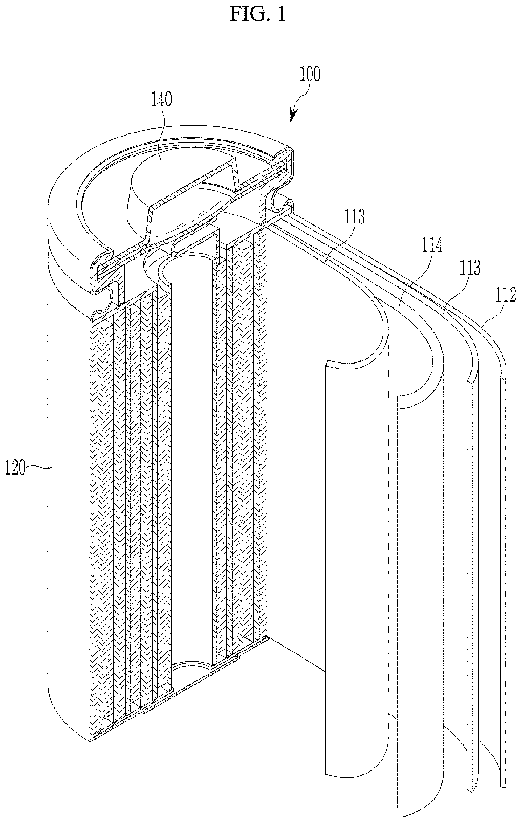

FIG. 1 is a schematic view illustrating a rechargeable lithium battery according to an embodiment. Referring to FIG. 1, a rechargeable lithium battery 100 according to an embodiment includes a battery cell including a positive electrode 114, a negative electrode 112 facing the positive electrode 114, a separator 113 between the positive electrode 114 and the negative electrode 112, and an electrolyte for a rechargeable lithium battery impregnating the positive electrode 114, the negative electrode 112, and the separator 113, a battery case 120 housing the battery cell, and a sealing member 140 sealing the battery case 120.

The electrolyte includes a non-aqueous organic solvent and a lithium salt.

The non-aqueous organic solvent serves as a medium for transmitting ions taking part in the electrochemical reaction of a battery. The non-aqueous organic solvent may be a carbonate-based, ester-based, ether-based, ketone-based, or alcohol-based solvent, or aprotic solvent. Examples of the carbonate-based solvent include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. Examples of the ester-based solvent include methyl acetate, ethyl acetate, n-propyl acetate, dimethyl acetate, methyl propionate, ethyl propionate, γ-butyrolactone, decanolide, valerolactone, mevalonolactone, caprolactone, and the like. The ether-based solvent may be dibutyl ether, tetraglyme, diglyme, dimethoxyethane, 2-methyltetrahydrofuran, tetrahydrofuran, and the like and the ketone-based solvent may be cyclohexanone, and the like. In addition, the alcohol-based solvent may be ethyl alcohol, isopropyl alcohol, etc. and the aprotic solvent may be nitriles such as R-CN (where R is a C2 to C20 linear, branched, or cyclic hydrocarbon group and may include a double bond, an aromatic ring, or an ether bond), amides such as dimethylformamide, dioxolanes such as 1,3-dioxolane, sulfolanes, and the like.

The non-aqueous organic solvent may be used alone or in a mixture. When the non-aqueous organic solvent is used in a mixture, the mixture ratio may be controlled in accordance with a desirable battery performance.

In addition, in the case of the carbonate-based solvent, a mixture of a cyclic carbonate and a chain carbonate may be used. In this case, when the cyclic carbonate and the chain carbonate are mixed in a volume ratio of about 1:1 to about 1:9, the electrolyte may exhibit excellent performance.

The non-aqueous organic solvent may further include an aromatic hydrocarbon-based organic solvent in addition to the carbonate-based solvent. In this case, the carbonate-based solvent and the aromatic hydrocarbon-based organic solvent may be mixed in a volume ratio of about 1:1 to about 30:1.

As the aromatic hydrocarbon-based solvent, an aromatic hydrocarbon-based compound represented by Chemical Formula I may be used.

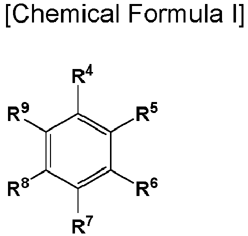

In Chemical Formula I, R⁴ to R⁹ are the same or different and are selected from hydrogen, a halogen, a C1 to C10 alkyl group, a haloalkyl group, and a combination thereof.

Specific examples of the aromatic hydrocarbon-based solvent may be selected from benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 2,3-difluorotoluene, 2,4-difluorotoluene, 2,5-difluorotoluene, 2,3,4-trifluorotoluene, 2,3,5-trifluorotoluene, chlorotoluene, 2,3-dichlorotoluene, 2,4-dichlorotoluene, 2,5-dichlorotoluene, 2,3,4-trichlorotoluene, 2,3,5-trichlorotoluene, iodotoluene, 2,3-diiodotoluene, 2,4-diiodotoluene, 2,5-diiodotoluene, 2,3,4-triiodotoluene, 2,3,5-triiodotoluene, xylene, and a combination thereof.

The electrolyte may further include vinylene carbonate or an ethylene carbonate-based compound of Chemical Formula II in order to improve cycle-life of a battery.

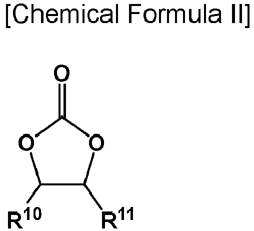

In Chemical Formula II, R¹⁰ and R¹¹ are the same or different, and are selected from hydrogen, a halogen, a cyano group, a nitro group, and fluorinated C1 to C5 alkyl group, provided that at least one of R¹⁰ and R¹¹ is selected from a halogen, a cyano group, a nitro group, and fluorinated C1 to C5 alkyl group, but both of R¹⁰ and R¹¹ are not hydrogen.

Examples of the ethylene carbonate-based compound may be difluoro ethylenecarbonate, chloroethylene carbonate, dichloroethylene carbonate, bromoethylene carbonate, dibromoethylene carbonate, nitroethylene carbonate, cyanoethylene carbonate, or fluoroethylene carbonate. The amount of the additive for improving cycle-life may be used within an appropriate range.

The lithium salt dissolved in the non-aqueous organic solvent supplies lithium ions in a battery, enables a basic operation of a rechargeable lithium battery, and improves transportation of the lithium ions between positive and negative electrodes.

Examples of the lithium salt include at least one supporting salt selected from LiPF₆, LiBF₄, LiSbF₆, LiAsF₆, LiN(SO₂C₂F₅)₂, Li(CF₃SO₂)₂N, LiN(SO₃C₂F₅)₂, Li(FSO₂)₂N (lithium bis(fluorosulfonyl)imide): LiFSI), LiC₄F₉SO₃, LiClO₄, LiAlO₂, LiAlCl₄, LiPO₂F₂, LiN(CₓF₂ₓ₊₁SO₂)(C_{y}F_{2y+1}SO₂), wherein x and y are natural numbers, for example, an integer ranging from 1 to 20, lithium difluoro(bisoxalato) phosphate, LiCI, Lil, LiB(C₂O₄)₂ (lithium bis(oxalato) borate, LiBOB), and lithium difluoro(oxalato)borate (LiDFOB).

The lithium salt may be used in a concentration ranging from about 0.1 M to about 2.0 M. When the lithium salt is included at the above concentration range, an electrolyte may have excellent performance and lithium ion mobility due to optimal electrolyte conductivity and viscosity.

The separator 113 separates a positive electrode 114 and a negative electrode 112 and provides a transporting passage for lithium ions and may be any generally-used separator in a lithium ion battery. In other words, it may have low resistance to ion transport and excellent impregnation for an electrolyte. For example, the separator may be selected from a glass fiber, polyester, Teflon, polyethylene, polypropylene, polytetrafluoroethylene, or a combination thereof. It may have a form of a non-woven fabric or a woven fabric. For example, in a lithium ion battery, a polyolefin-based polymer separator such as polyethylene and polypropylene is mainly used. In order to ensure the heat resistance or mechanical strength, a coated separator including a ceramic component or a polymer material may be used. Optionally, it may have a mono-layered or multilayered structure.

Rechargeable lithium batteries may be classified as lithium ion batteries, lithium ion polymer batteries, and lithium polymer batteries according to the presence of a separator and the type of electrolyte used therein. The rechargeable lithium batteries may have a variety of shapes and sizes, and include cylindrical, prismatic, coin, or pouch-type batteries, and may be thin film batteries or may be rather bulky in size. Structures and manufacturing methods for lithium ion batteries pertaining to this disclosure are well known in the art.

The rechargeable lithium battery according to an embodiment may be used in IT mobile devices and the like due to high capacity, excellent storage stability at high temperature, cycle-life characteristics, and high-rate capability.

Hereinafter, examples of the present disclosure and comparative examples are described. It is to be understood, however, that the examples are for the purpose of illustration and are not to be construed as limiting the present disclosure.

### Example 1

### Manufacture of Negative Electrode

### First Region

A negative electrode active material was prepared by mixing 93 wt% of a graphite-based first negative electrode active material having a spherical shape, an average particle diameter (D50) of 16.0 µm, tap density of 1.27 g/cc, and a BET specific surface area of 1.8 m²/g with 7 wt% of a silicon-based active material. The silicon-based active material was a silicon-carbon composite in a form of a core including artificial graphite and silicon particles and soft carbon coated on the surface of the core and had an average particle diameter (D50) of 10.2 µm and a shape similar to a sphere. 96.38 wt% of the prepared negative electrode active material, 2.72 wt% of a styrene-butadiene rubber, and 0.9 wt% of carboxylmethyl cellulose were mixed in distilled water, preparing a first region composition.

### Second Region

A negative electrode active material was prepared by mixing 93 wt% of a graphite-based second negative electrode active material having an irregular shape, an average particle diameter (D50) of 14.5 µm, tap density of 1.22 g/cc, and a BET specific surface area of 1.3 m²/g with 7 wt% of a silicon-based active material. The silicon-based active material was the same as used in the first region. 98.42 wt% of the prepared negative electrode active material, 0.68 wt% of a styrene-butadiene rubber, and 0.9 wt% of carboxylmethyl cellulose were mixed in distilled water, preparing a second region composition.

The first region composition and the second region composition were simultaneously coated on a current collector by using a double slot die applicator so that the first region and the second region were located in order on the current collector and then, dried and compressed.

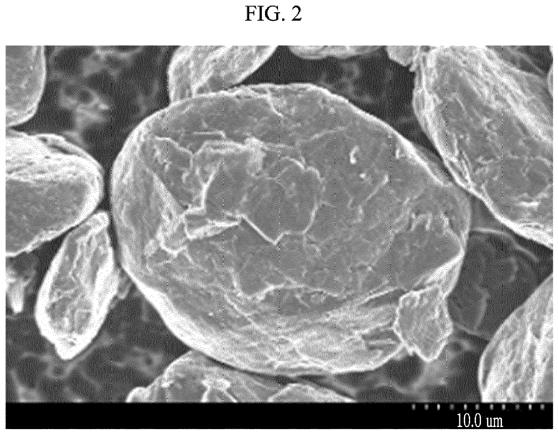

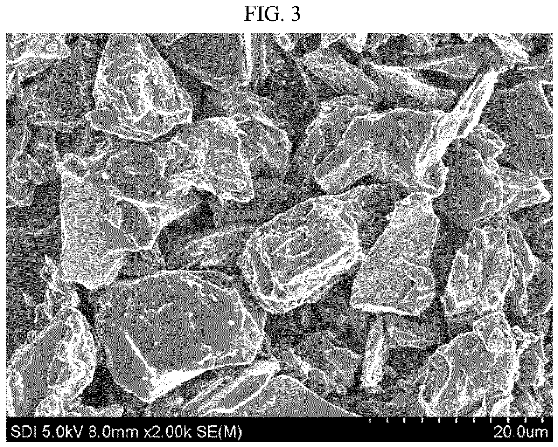

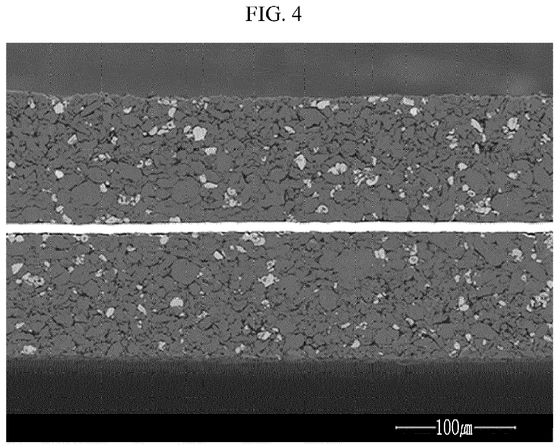

FIG. 2 is a scanning electron microscopic photograph of the first negative active material, and FIG. 3 is a scanning electron microscopic photograph of the second negative active material. Comparing FIG. 2 with FIG. 3, the first negative electrode active material and the second negative electrode active material had different morphologies. FIG. 4 is a scanning electron microscope photograph of the cross-section of the negative electrode plate, which shows that negative electrode active material layers were formed on both surfaces of the current collector. The negative electrode active material layer on one surface had a thickness of about 100 µm, wherein the first region had a thickness of about 50 µm, while the second region had a thickness of about 50 µm.

### Manufacture of Battery Cells

A coin half-cell was manufactured by disposing a separator having a polyethylene polypropylene multilayer structure between the prepared negative electrode and a lithium metal counter electrode and then, injecting an electrolyte solution in which 1.0 M LiPF₆ lithium salt was added to a solvent prepared by mixing ethylene carbonate and diethyl carbonate in a volume ratio of 50:50.

### Comparative Example 1

A negative electrode and a cell were manufactured in the same manner as Example 1 except that a second region composition was prepared by mixing 98.42 wt% of the negative electrode active material of the first region, 0.68 wt% of a styrene-butadiene rubber, and 0.9 wt% of carboxylmethyl cellulose. Accordingly, the negative electrodes having the same morphology and properties of the first region and the second region but including the binder in a different ratio were manufactured.

### Comparative Example 2

A negative electrode and a cell were manufactured in the same manner as Example 1 except that the negative electrode active material of the first region was prepared by mixing 86 wt% of the first negative electrode active material and 14 wt% of the silicon-based active material, and the negative electrode active material of the second region used 100 wt% of the first negative electrode active material. A negative electrode active material layer according to Comparative Example 2 had a structure that the silicon-based active material existed in the lower portion (first region) and substantially the same morphology in the upper and lower portions.

### Evaluation Example 1: Evaluation of Porosity of Negative Electrode

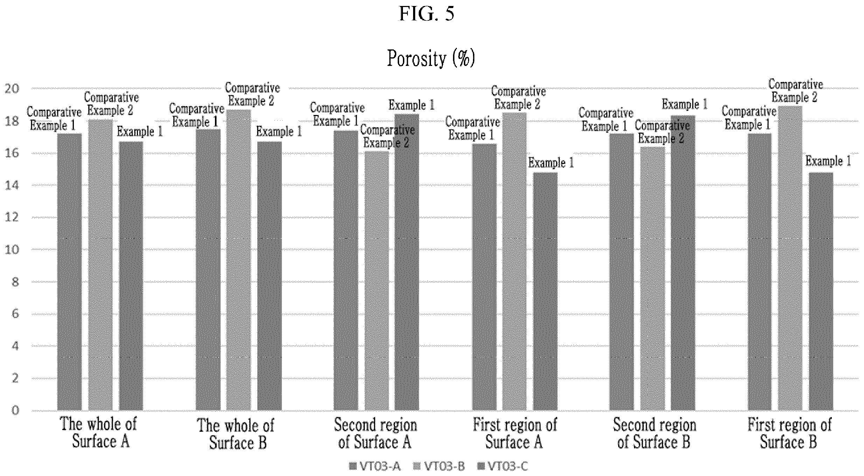

The negative electrodes of Example 1 and Comparative Examples 1 and 2 were measured with respect to porosity of the negative electrode active material layers through nano-computed tomography (nano-CT), and the results are shown in FIG. 5. The measurement was performed by using a device made by Carl Zeiss Xradia 510 Versa under conditions of 80kV, 7W, obj: 20X, Binning: 1, Exposure: 20s. In FIG. 4 showing the cross-section of the negative electrode, an upper surface with a white current collector in the middle was arbitrarily referred to as a surface A, while a lower surface was referred to as a surface B. An analysis range (thickness) thereof was about 75 µm.

As a result of the measurement, in the surface A of Comparative Example 1, the first region exhibited porosity of 16.6%, while the second region had porosity of 17.4%, and thus a ratio of the porosity of the second region to the porosity of the first region was 104%, and in the surface B of Comparative Example 1, the first region exhibited porosity of 17.2%, while the second region exhibited porosity of 17.2%, and thus a ratio of the porosity of the second region to the porosity of the first region was 100%, which confirmed that the porosity of the first region and the porosity of the second region were at the same level. That is, in the case of Comparative Example 1, in both the A surface and the B surface, the ratio of the porosity of the second region to the porosity of the first region was less than 110%. In other words, in Comparative Example 1, porosity of the first region and the second region were similar to each other.

In addition, referring to FIG. 5, in both of the surface A and the surface B of Comparative Example 2, the second region exhibited higher porosity than the first region. On the contrary, in the surface A of Example 1, the porosity of the second region was 18.4%, which was higher than 14.8% of the porosity of the first region, wherein a ratio of the porosity of the second region to the porosity of the first region was 124% or so. In addition, in the surface B of Example 1, the porosity of the second region was 18.3%, which was higher than 14.8% of the porosity of the first region, wherein a ratio of the porosity of the second region to that of the first region was 124% or so.

### Evaluation Example 2: Evaluation of Battery Cells

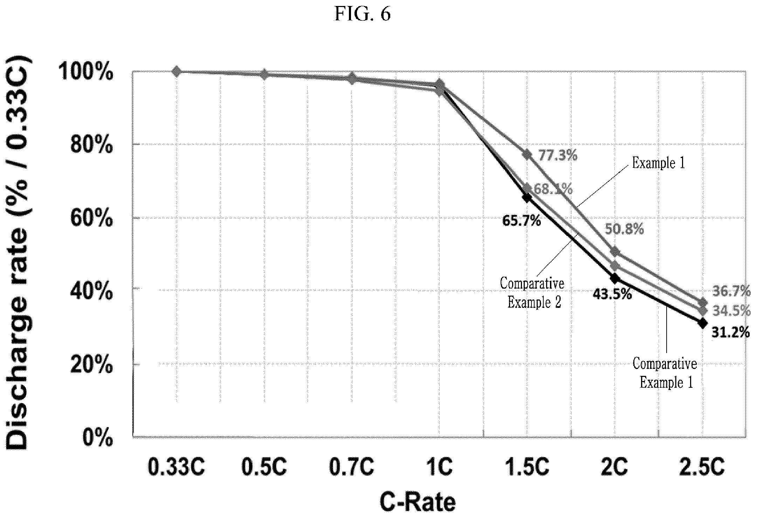

The cells of Example 1 and Comparative Examples 1 and 2 were charged at a constant current of 0.33 C to an upper limit voltage of 4.25 V and cut off in a constant voltage mode at a 0.05 C rate at 25 °C. Subsequently, the cells were discharged to 2.8 V at 0.33 C, 0.5 C, 0.7 C, 1.0 C, 1.5 C, 2.0 C, and 2.5 C and evaluated with respect to discharge rates at each rate, and the results are shown in FIG. 6. Referring to FIG. 6, Example 1 exhibited improved capacity retention at high-rate discharging at 1.5 C, 2.0 C, and 2.5 C.

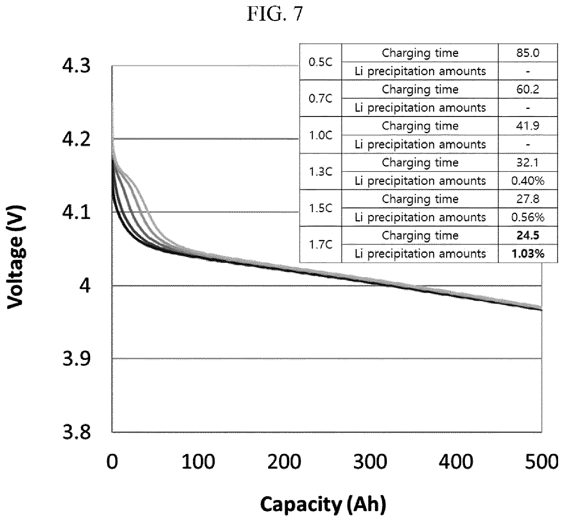

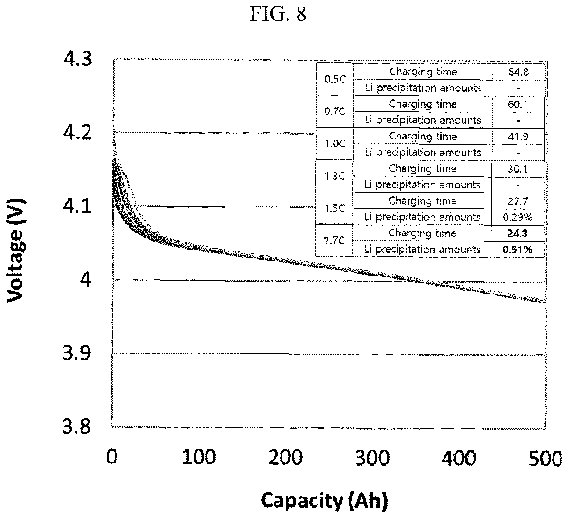

In addition, the cells of Example 1 and Comparative Example 1 were evaluated with respect to lithium precipitation amount during the rapid charging, while the cells were respectively charged at 0.5 C, 0.7 C, 1.0 C, 1.3 C, 1.5 C, and 1.7 C to an upper limit voltage of 4.25 V. The result of Comparative Example 1 is shown in FIG. 7, and the result of Example 1 is shown in FIG. 8. In FIG. 7, Comparative Example 1 exhibited lithium precipitation amount of 1.03% during the rapid charging at 1.7 C. On the contrary, in FIG. 8, Example 1 exhibited lithium precipitation amount of 0.51%, which was less than 1%, even during the rapid charging at 1.7 C. The lower the lithium precipitation amount was, the better the cycle life characteristics at high rates were, and when the lithium precipitation amount was maintained at less than 1% like Example 1, excellent cycle-life characteristics were obtained at rapid charging and discharging.

### Example 2

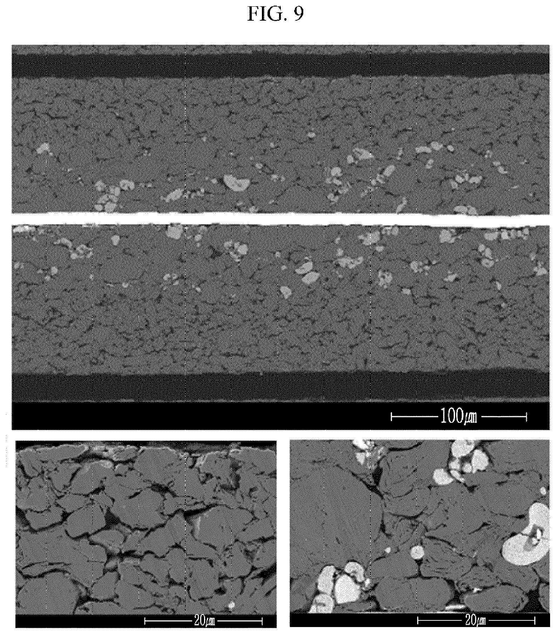

A negative electrode and a cell of Example 1 were manufactured in the same manner as Example 1 except that the negative electrode active material of the first region was prepared by using 86 wt% of the first negative electrode active material and 14 wt% of the silicon-based active material, and 100 wt% of the second negative electrode active material was used in the second region. FIG. 9 is a scanning electron microscope showing the cross-section of the negative electrode according to Example 2. Referring to FIG. 9, in the negative electrode of Example 2, the silicon-based active material was present only in the first region, and the first region and the second region exhibited different morphologies.

### Example 3

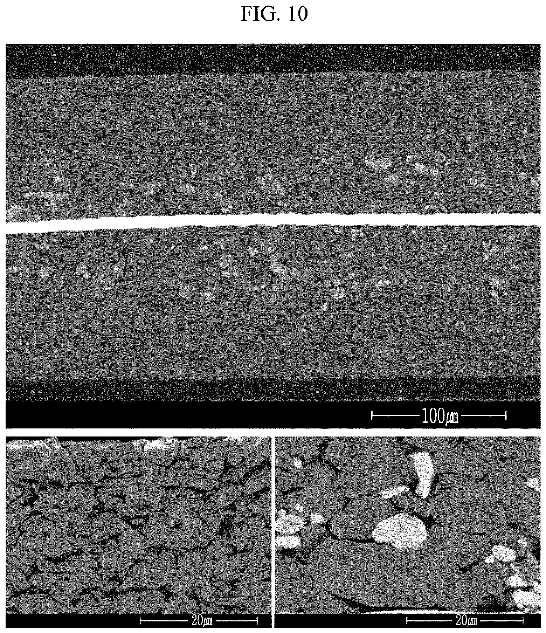

A negative electrode and a cell were manufactured in the same manner as Example 1 except that the negative electrode active material of the first region was prepared by mixing 86 wt% of the first negative electrode active material and 14 wt% of the silicon-based active material, and the negative electrode active material of the second region used 100 wt% of a graphite-based second negative electrode active material having an irregular shape, an average particle diameter (D50) of about 11 µm, tap density of about 1.00 g/cc, and a BET specific surface area of about 1.70 m²/g. FIG. 10 is a scanning electron microscopic photograph of a cross-section of the negative electrode according to Example 3. Referring to FIG. 10, in the negative electrode of Example 3, the silicon-based active material existed in the first region alone, and the first region and the second region had different morphologies.

### Comparative Example 3

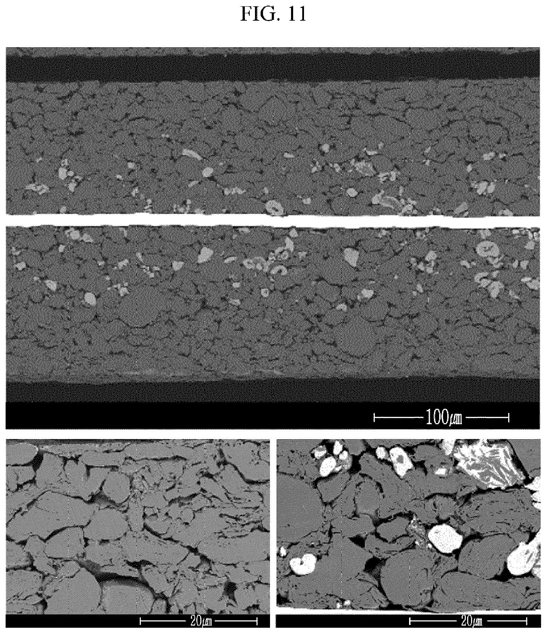

A negative electrode and a cell were manufactured in the same manner as Example 1 except that a negative electrode active material of a first region was prepared by mixing 43 wt% of the first negative electrode active material of Example 1, 43 wt% of the second negative electrode active material of Example 1, and 14 wt% of the silicon-based active material of Example 1, and a negative electrode active material of a second region was prepared by mixing 50 wt% of the first negative electrode active material of Example 1 and 50 wt% of the second negative electrode active material of Example 1. FIG. 11 is a scanning electron microscopic photograph of a cross section of the negative electrode according to Comparative Example 3. Referring to FIG. 11, in a negative electrode active material layer of Comparative Example 3, a silicon-based active material existed in the lower portion alone, and the upper and lower portions had substantially the same morphologies.

### Evaluation Example 3: Evaluation of Porosity of Negative Electrode

The negative electrodes of Examples 2 and 3 and Comparative Example 3 were measured with respect to porosity of the negative electrode active material layers through a scanning electron microscope (SEM), and the results are shown in Table 1. The measurement was performed by using a scanning electron microscope made by Magellan (FEI Company) and analyzed under conditions of 3 keV, 0.8 nA BSE, and 5 keV, 3.2 nA EDS. In FIG. 9 and the like showing the cross-sections of the negative electrodes, the upper surface with a white current collector in the middle is referred to as a surface A, while the lower surface is referred to as a surface B.

**(Table 1)**

| | | | Porosity (%) |
|---|---|---|---|
| Example 2 | Surface A | first region | 11.25 |
| | | second region | 15.14 |
| | Surface B | first region | 11.37 |
| | | second region | 16.08 |
| Example 3 | Surface A | first region | 11.83 |
| | | second region | 16.95 |
| | Surface B | first region | 10.86 |
| | | second region | 18.74 |
| Comparative Example 3 | Surface A | first region | 14.02 |
| | | second region | 15.49 |
| | Surface B | first region | 14.34 |
| | | second region | 15.42 |

Referring to Table 1, Comparative Example 3 exhibited almost no porosity difference in the first region (lower) and the second region (upper). On the contrary, Examples 2 and 3 exhibited higher porosity in the second region than in the first region and a ratio of the porosity of the second region to the porosity of the first region of 135%, 142%, 143%, 173%, and the like.

While this disclosure has been described in connection with what is presently considered to be practical example embodiments, it is to be understood that the invention is not limited to the disclosed embodiments. On the contrary, it is intended to cover various modifications and equivalent arrangements included within the scope of the appended claims.

**<Description Symbols>**

| | | | |
|---|---|---|---|
| 100: | rechargeable lithium battery | 112: | negative electrode |
| 113: | separator | 114: | positive electrode |
| 120: | battery case | 140: | sealing member |

## Claims

1. A negative electrode for a rechargeable lithium battery, comprising
a current collector and a negative electrode active material layer disposed on the current collector,
wherein the negative electrode active material layer includes a first region in contact with the current collector and including a first negative electrode active material, and a second region disposed on the first region and including a second negative electrode active material,
each of the first negative electrode active material and second negative electrode active material has an average particle diameter (D50) of 9 µm to 22 µm,
morphologies of the first negative electrode active material and the second negative electrode active material are different from each other,
a porosity of the second region is higher than that of the first region, and
a ratio of the porosity of the second region to the porosity of the first region ranges from 110% to 190%.

2. The negative electrode of claim 1, wherein the first negative electrode active material is spherical and the second negative electrode active material is amorphous.

3. The negative electrode of claim 1 or claim 2, wherein the first negative electrode active material and the second negative electrode active material is a carbon-based active material, respectively.

4. The negative electrode of any one of claims 1 to 3, wherein a tap density of the first negative electrode active material ranges from 1.2 g/cc to 1.5 g/cc, and a tap density of the second negative electrode active material ranges from 0.8 g/cc to 1.4 g/cc.

5. The negative electrode of any one of claims 1 to 4, wherein a BET specific surface area of the first negative electrode active material ranges from 1.4 m²/g to 2.0 m²/g, and the specific surface area of the second negative electrode active material ranges from 1.0 m²/g to 1.8 m²/g.

6. The negative electrode of any one of claims 1 to 5, wherein the first region and/or the second region further includes a silicon-based active material.

7. The negative electrode of claim 6, wherein the silicon-based active material is included in an amount of 1 wt% to 15 wt% based on each total weight of the first region and/or second region.

8. The negative electrode of claim 6 or claim 7, wherein an average particle diameter (D50) of the silicon-based active material ranges from 5 µm to 15 µm.

9. The negative electrode of any one of claims 1 to 8, wherein each thickness of the first region and the thickness of the second region ranges from 30 µm to 100 µm.

10. The negative electrode of any one of claims 1 to 9, wherein
the first region and the second region further include a binder, and
a weight ratio of the binder in the first region to the binder in the second region ranges from 60:40 to 95:5.

11. A rechargeable lithium battery, comprising
the negative electrode for a rechargeable lithium battery according to any one of claims 1 to 10, a positive electrode, and an electrolyte.
